# EUROPEAN PATENT APPLICATION

(11) **EP 4 708 133 A1**
(43) Date of publication of application: **11.03.2026**
(21) Application number: 25191197.0
(22) Date of filing: 23.07.2025
(51) Int. Cl.: G06K 19/077

(54) **RFID LABEL TAG**

(30) Priority: 10.09.2024 NL 2038608
(71) Applicant: Cleton, Barto, Frank, Ir., 2801 PM Gouda (NL)
(72) Inventor: THANKACHAN VARGHESE, Rony, Ruislip Greater London (GB); ROBADEY, Jean-Miguel, BOSSONNENS (CH); WESTERGAARD, Martin, Aalborg (DK); ZHAO, Yongxun, Qingdao Shandong (CN); HEWETT, David Edward, Qingdao Shandong (CN); VILNER, Charles, Crawley Sussex (GB); KINGTON, Antony, Alton Hampshire (GB)
(74) Representative: van Breda, Jacobus

(57) **Abstract**

A RFID label tag (1) for authentication of a plant container comprising a loop (2) that is dimensioned to snugly fit around a part of the plant container, said RFID label tag (1) comprising further a RFID chip housing (3) connected to the loop (2), said RFID chip housing (3) comprising an antenna (4), and wherein the RFID label tag (1) comprises a pre-mounted form and a mounted form, wherein in the pre-mounted form the loop (2) is open to receive a part of the plant container and wherein the RFID chip housing (3) comprises two housing parts (5, 6) that are connected to the loop (2) on opposite sides thereof, and wherein in the mounted form the two housing parts (5, 6) are joined together to close the RFID chip housing (3) and to close the loop (2) which is arranged to snugly fit around the part of the plant container, and that the loop (2) forms part of the antenna (4).

## Description

The invention relates to an RFID label tag for authentication of a plant container comprising a loop that is dimensioned to snugly fit around a part of the plant container, said RFID label tag comprising further a RFID chip housing connected to the loop, said RFID chip housing comprising an antenna, and wherein the RFID label tag comprises a pre-mounted form and a mounted form, wherein in the pre-mounted form the loop is open to receive a part of the plant container and wherein the RFID chip housing comprises two housing parts that are connected to the loop on opposite sides thereof, and wherein in the mounted form the two housing parts are joined together to close the RFID chip housing and to close the loop which is arranged to snugly fit around the part of the plant container.

US2011/0023343 discloses an RFID label tag suitable for authentication of a plant container comprising a loop that is dimensioned to snugly fit around a part of the plant container, wherein said RFID label tag comprises a flat part connected to the loop, wherein the flat part is provided with a RFID chip, and wherein the RFID label tag comprises a pre-mounted form wherein the loop is open to receive a part of the plant container and wherein the flat part is separated into two flat part halves, said flat part halves being connected to the loop on opposite sides thereof, and a mounted form wherein the loop is closed and arranged to snugly fit around the part of the plant container when the two flat part halves are joined together.

It is an object of the invention to provide a RFID label tag which is as much as possible resistant to tampering, and in general can only be removed from an authentic plant container at the expense of irreparable damage to the RFID label tag which then provides visible proof of tampering.

The RFID label tag of the invention is therefore provided with one or more features mentioned in the appended claims.

In a first aspect of the invention the loop forms part of the antenna. This makes possible that the antenna which is made of a suitable metal material, will in a controlled and predictable way break when tampered with after mounting on the part of the plant container that is to be identified by the tag.

Suitably distant parts of the antenna are molded into the two housing parts. This brings about that when tampering with one of the housing parts occurs, the antenna is likely to be visibly and/or operationally damaged, which can be easily monitored.

A further preferable feature is that at least one of the two housing parts is at least in part transparent to enable viewing at a humanly or machine readable code. This option of how the RFID label tag according to the invention may be construed opens up further possibilities to monitor tampering with the label tag, as will be discussed hereinafter.

First it has to be remarked that preferably the RFID chip housing has rounded corners to provide it with an appropriate degree of damage resistance. This avoids that the RFID label tag will be viewed at as being subjected to tampering attempts, whereas it may have only been subjected to some rough handling during transport of the plant containers it is labeled to.

Turning back to the matter of the transparency of one of the two housing parts, it is preferred that at least one of the two housing parts is equipped with a label which in the mounted condition is visible through the housing part that is at least in part transparent. Preferably said label is provided with the humanly or machine readable code.

Proof of tampering can be easily identified when the RFID label tag of the invention is provided with one or more of the following features:
- that in the pre-mounted condition a release liner sticks to and covers the label, wherein said release liner is removable from the label so as to arrange that after converting the RFID label tag from the pre-mounted condition to the mounted condition, the label with the humanly or machine readable code is visible through the housing part that is at least in part transparent;
- that the label has a glued surface which sticks to the housing part that is at least in part transparent;
- that at the back of the label facing away from the housing part that is at least in part transparent, the label is supported on a foam subassembly that is mounted on the housing part that faces the back of the label;
- that the label is provided with a rupture line to ensure the label is cut differentially when in the mounted condition the housing parts are separated from each other.

Preferably the foam subassembly is divided in two parts separated by an at least partly cut straight under the rupture line. This causes that when rupturing the label also the two parts of the foam subassembly are divided away from each other, which will provide a dark line when trying to read the code that is provided on the label at the location of the rupture line.

Preferably the two housing parts are provided with cooperating pins and gaps, respectively, and claws and shoulders. This assists in placing the two housing parts exactly onto each other when converting the RFID label tag from the pre-mounted into the mounted condition, without unintendedly disrupting the label and the humanly or machine readable code provided thereon.

A further preferable feature is that one of the two housing parts is provided with a button which clampingly fits into a washer forming part of the other of the two housing parts. Efforts to separate the two housing parts from each other may then be easily recognizable by damage to the button or to the washer.

A close fit of the two housing ports to each other can be secured by arranging that the button is equipped with side extensions defining a neck behind the extensions, wherein the washer is provided with obliquely upstanding petals to engage the neck of the button behind the side extensions.

It is preferable that the strength of the button is lower than the strength of the upstanding petals of the washer so as to arrange that the button will break when the two housing parts are separated from each other.

It is to be noted that each of the features of the invention as itemized in the appended claims can be applied independent from each other, but also cumulative to promote the highest achievable effect in providing proof of and resistance against tampering with the RFID label tag of the invention.

The accompanying drawing, which is incorporated into and forms a part of the specification, illustrates one or more embodiments of the present invention and, together with the description, serves to explain the principles of the invention. The drawing is only for the purpose of illustrating one or more embodiments of the invention and is
not to be construed as limiting the invention.

In the drawing:
- figure 1 depicts the mounted condition of the RFID label tag according to the invention;
- figure 2 provides different views of the RFID label tag according to the invention when in the pre-mounted condition;
- figure 3 highlights a certain aspect relating to the antenna of the RFID label tag according to the invention;
- figure 4 highlights certain aspects relating to the closure of the housing parts of the RFID label tag according to the invention;
- figure 5 shows some examples of the effects of tampering with the RFID label tag of the invention;
- figures 6 shows an aspect of mounting the label in the RFID chip housing of the RFID label tag of the invention; and
- figure 7 shows the RFID label tag according to the invention in pre-mounted condition.

Whenever in the figures the same reference numerals are applied, these numerals refer to the same parts.

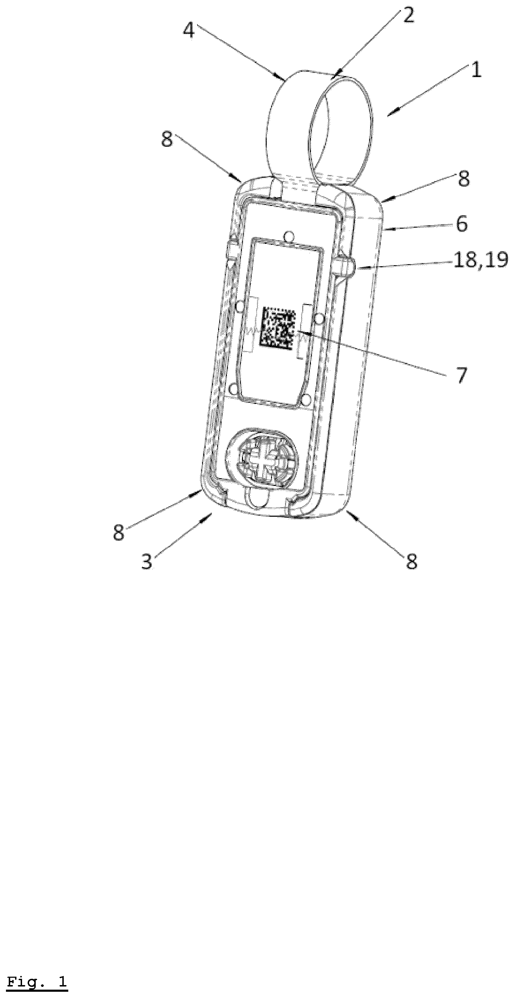

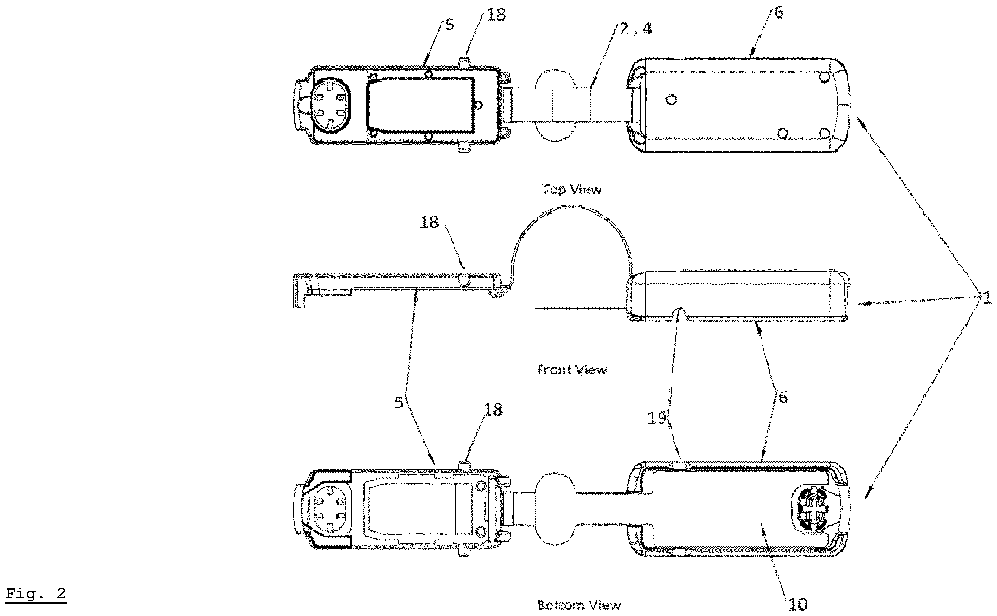

Referring first to figure 1 and figure 2, figure 1 depicts the mounted condition of the RFID label tag 1 of the invention, whereas figure 2 depicts the pre-mounted condition of the RFID label tag of the invention, wherein said figure 2 provides a top view, a side view, and a bottom view respectively.

The RFID label tag 1 comprises a loop 2 that is dimensioned to snugly fit around a part of the plant container which is labelled by the RFID label tag 1. Further the RFID label tag 1 comprises in known way a RFID chip housing 3 connected to the loop 2.

It shows in figure 2 that in the pre-mounted form the loop 2 is open to receive a part of the plant container which is to be labelled, and that the RFID chip housing 3 comprises two housing parts 5, 6 that are connected to the loop 2 on opposite sides thereof.

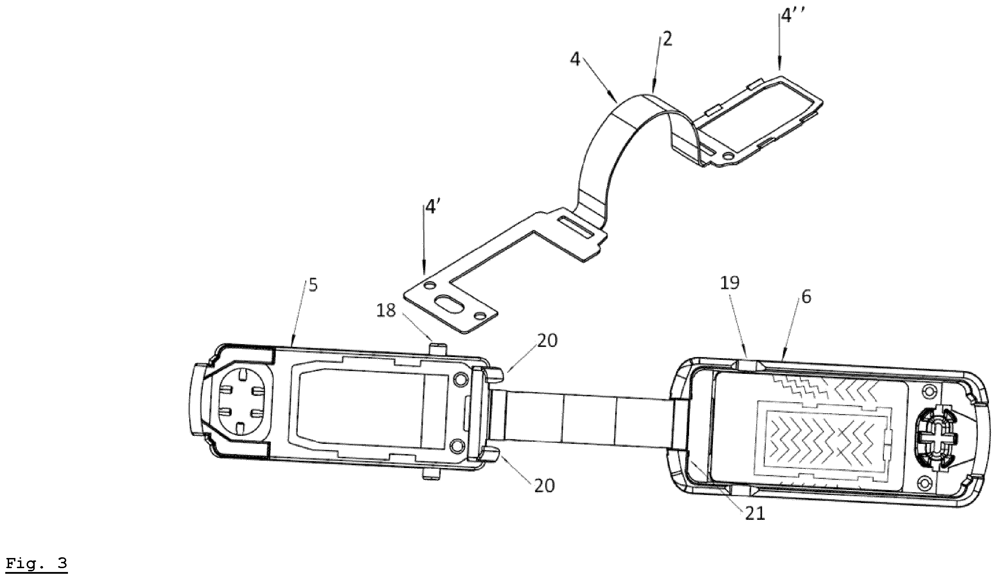

According to the invention the loop 2 forms part of an antenna 4 which is partly also embedded in the two housing parts 5 and 6 that in the assembled form that is shown in figure 1 form the housing 3. Preferably the distant parts 4', 4'' of the antenna 4 that are separated from each other by the loop 2 are moulded into the two housing parts 5, 6. The complete antenna 4 is shown separate from the first housing part 5 and the second housing part 6 in figure 3.

In the mounted form shown in figure 1 the two housing parts 5, 6 are joined together to close the RFID chip housing 3 and to close the loop 2 which is arranged to snugly fit around the part of the plant container that is to be labelled with the RFID label tag of the invention.

It can be inferred from figure 1 that at least one 5 of the two housing parts 5, 6 is at least in part transparent to enable viewing at a humanly or machine readable code 7.

It further shows that the RFID chip housing 3 has rounded corners 8 to provide it with damage resistance.

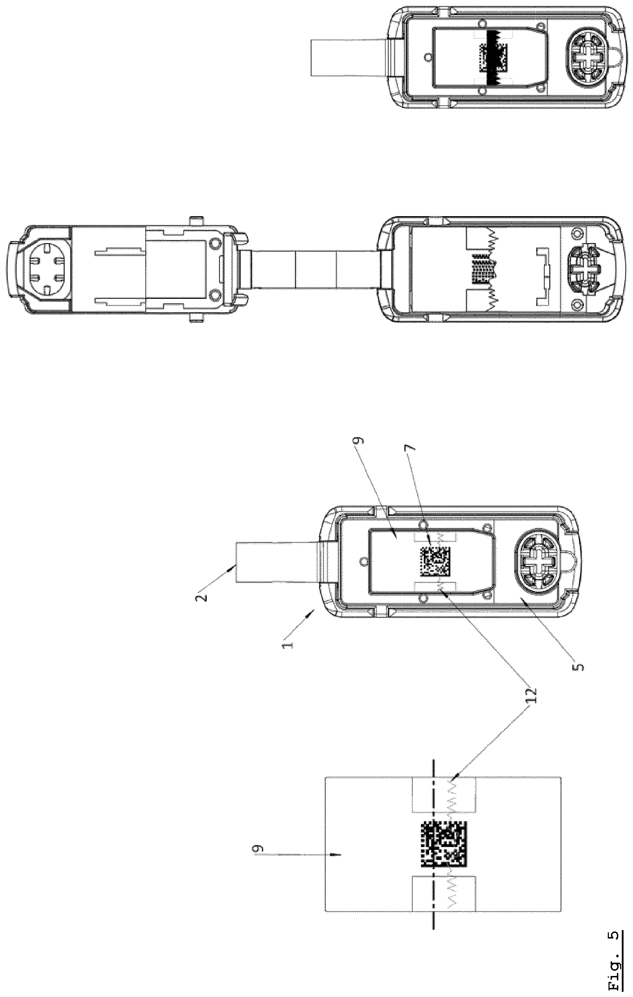

Figures 1 and 5 depict that at least one of the two housing parts 5, 6 is equipped with a label 9 which in the mounted condition is visible through the housing part 5 that is at least in part transparent. Said label 9 is provided with the humanly or machine readable code 7.

Figure 2 shows that in the pre-mounted condition a release liner 10 sticks to and covers the label, wherein said release liner 10 is removable from the label so as to arrange that after converting the RFID label tag from the pre-mounted condition of fig. 2 into the mounted condition of fig. 1 and 5, the label 9 with the humanly or machine readable code 7 is visible through the housing part 5 that is at least in part transparent.

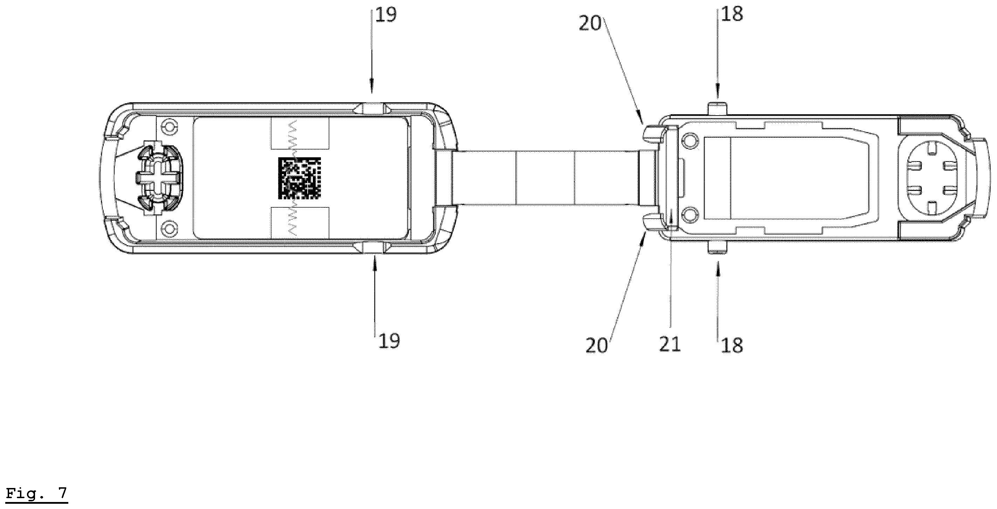

With reference to figure 7 it is shown that the two housing parts 5, 6 are provided with cooperating pins 18 and gaps 19, respectively, and claws 20 and shoulders 21. This assists in placing the two housing parts 5, 6 exactly onto each other when converting the RFID label tag 1 from the pre-mounted into the mounted condition, without unintendedly disrupting the label 9 and the humanly or machine readable code provided thereon.

It is to be noted that preferably the label 9 has a glued surface which sticks to the housing part 5 that is at least in part transparent.

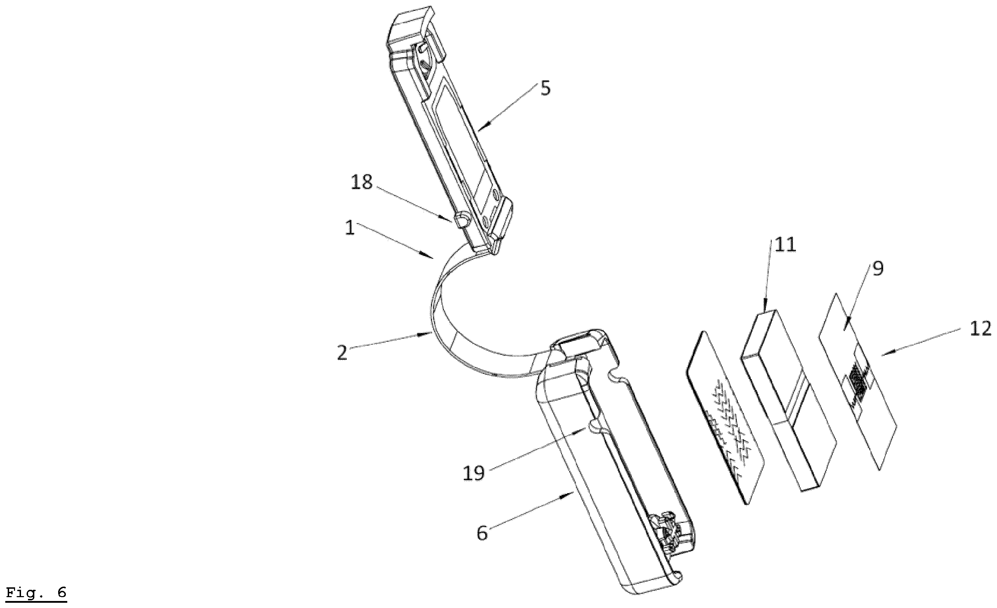

In figure 6 it is shown that at the back of the label 9 facing away from the housing part 5 that is at least in part transparent, the label 9 is supported on a foam subassembly 11 that is mounted on the housing part 6 that faces the back of the label 9.

Regarding said foam subassembly 11 it is remarked that same is divided in two parts separated by an at least partly cut straight under the rupture line 12. When rupturing the label 9 also the two parts of the foam subassembly 11 are divided away from each other, which will provide a dark line when trying to read the code that is provided on the label 9 at the location of the rupture line 12.

It is best shown in figure 5 that the label 9 is provided with a rupture line 12 to ensure the label 9 is cut differentially when in the mounted condition of figures 1 and 5, the housing parts 5, 6 are separated from each other, see the two righthand photographic pictures of figure 5.

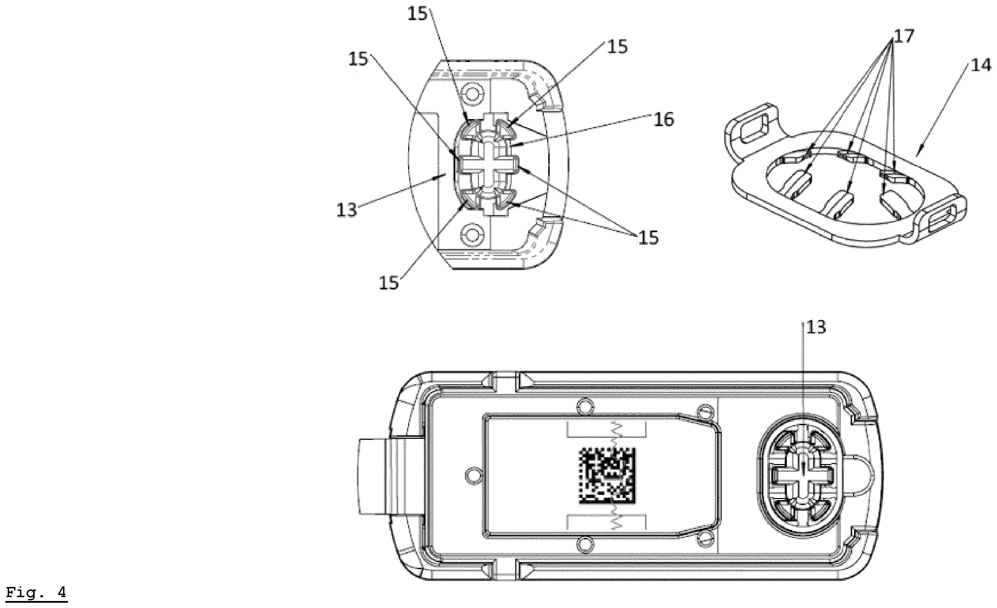

Turning now to figure 4, it shows that one of the two housing parts 5, 6 is provided with a button 13 which clampingly fits into a washer 14 forming part of the other of the two housing parts 5, 6.

The button 13 is equipped with side extensions 15 defining a neck 16 behind the extensions 15, while the washer 14 is provided with obliquely upstanding petals 17 to engage the neck 16 of the button 13 behind the side extensions 15.

The strength of the button 13 is lower than the strength of the upstanding petals 17 of the washer 14 so as to arrange that the button 13 or its extensions 15 will break when the two housing parts 5, 6 are separated from each other.

Although the invention has been discussed in the foregoing with reference to an exemplary embodiment of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claim to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

## Claims

1. A RFID label tag (1) for authentication of a plant container comprising a loop (2) that is dimensioned to snugly fit around a part of the plant container, said RFID label tag (1) comprising further a RFID chip housing (3) connected to the loop (2), said RFID chip housing (3) comprising an antenna (4), and wherein the RFID label tag (1) comprises a pre-mounted form and a mounted form, wherein in the pre-mounted form the loop (2) is open to receive a part of the plant container and wherein the RFID chip housing (3) comprises two housing parts (5, 6) that are connected to the loop (2) on opposite sides thereof, and wherein in the mounted form the two housing parts (5, 6) are joined together to close the RFID chip housing (3) and to close the loop (2) which is arranged to snugly fit around the part of the plant container, **characterized in that** the loop (2) forms part of the antenna (4).

2. The RFID label tag (1) according to claim 1, **characterized in that** distant parts (4', 4") of the antenna (4) are moulded into the two housing parts (5, 6).

3. The RFID label tag (1) according to claim 1 or 2, **characterized in that** at least one of the two housing parts (5, 6) is at least in part transparent to enable viewing at a humanly or machine readable code (7).

4. The RFID label tag (1) according to any one of claims 1-3, **characterized in that** the RFID chip housing (3) has rounded corners (8) to provide it with damage resistance.

5. The RFID label tag (1) according to any one of claims 1-4, **characterized in that** at least one of the two housing parts (5, 6) is equipped with a label (9) which in the mounted condition is visible through the housing part (5) that is at least in part transparent.

6. The RFID label tag (1) according to claim 5, **characterized in that** in the pre-mounted condition a release liner (10) sticks to and covers the label (9), wherein said release liner (10) is removable from the label (9) so as to arrange that after converting the RFID label tag (1) from the pre-mounted condition to the mounted condition, the label (9) is visible through the housing part (5) that is at least in part transparent.

7. The RFID label tag according to any one of claims 1-6, **characterized in that** the two housing parts (5, 6) are provided with cooperating pins (18) and gaps (19), respectively and claws (20) and shoulders (21).

8. The RFID label tag (1) according to any one of claims 5-7, **characterized in that** the label (9) has a glued surface which sticks to the housing part (5) that is at least in part transparent.

9. The RFID label tag (1) according to any one of claims 5-8, **characterized in that** at the back of the label (9) facing away from the housing part (5) that is at least in part transparent, the label (9) is supported on a foam subassembly (11) that is mounted on the housing part (6) that faces the back of the label (9).

10. The RFID label tag according to any one of claims 5-9, **characterized in that** the label (9) is provided with a rupture line (12) to ensure the label (9) is cut differentially when in the mounted condition the housing parts (5, 6) are separated from each other.

11. The RFID label tag according to claim 9 and claim 10, **characterized in that** the foam subassembly (11) is divided in two parts separated by a separating cut straight under the rupture line (12).

12. The RFID label tag according to any one of claims 1-11, **characterized in that** one of the two housing parts (5, 6) is provided with a button (13) which clampingly fits into a washer (14) forming part of the other of the two housing parts (5, 6).

13. The RFID label tag according to claim 12, **characterized in that** the button (13) is equipped with side extensions (15) defining a neck (16) behind the extensions, wherein the washer (14) is provided with obliquely upstanding petals (17) to engage the neck (16) of the button (13) behind the side extensions (15).

14. The RFID label tag according to claim 13, **characterized in that** the strength of the button (13) is lower than the strength of the upstanding petals (17) of the washer (14) so as to arrange that the button (13) will break when the two housing parts (5, 6) are separated from each other.
